# NEUE EUROPÄISCHE PATENTSCHRIFT

(11) **EP 1 759 446 B2**
(45) Veröffentlichungstag und Bekanntmachung des Hinweises auf die Entscheidung über den Einspruch: **10.08.2011**
(45) Hinweis auf die Patenterteilung: 24.10.2007
(21) Anmeldenummer: 05747721.8
(22) Anmeldetag: 02.05.2005
(51) Int. Cl.: H02K 15/085

(54) **WICKELVORRICHTUNG**
WINDING DEVICE
DISPOSITIF DE BOBINAGE

(30) Priorität: 15.06.2004 DE 102004028566
(43) Veröffentlichungstag der Anmeldung: 07.03.2007
(73) Patentinhaber: Aumann GMBH, 32339 Espelkamp (DE)
(72) Erfinder: VOGT, Thomas, 32339 Espelkamp (DE)
(74) Vertreter: Scheffler, Jörg
(86) Internationale Anmeldenummer: PCT/DE2005/000817
(87) Internationale Veröffentlichungsnummer: WO 2005/124974

(56) Entgegenhaltungen:
- EP-A- 0 182 177
- EP-B1- 0 098 666
- DE-A- 2 632 671
- DE-A- 3 049 406
- DE-A1- 3 516 763
- DE-A1- 3 531 730
- DE-C2- 3 211 688
- JP-A- 63 081 670
- JP-A- 2003 169 455
- US-A- 3 791 864
- US-A- 5 079 058
- US-A- 6 003 805
- US-B2- 6 808 806
- PATENT ABSTRACTS OF JAPAN Bd. 1995, Nr. 07, 31. August 1995 (1995-08-31) & JP 07 095748 A (ODAWARA ENG:KK), 7. April 1995 (1995-04-07)
- PATENT ABSTRACTS OF JAPAN Bd. 1998, Nr. 04, 31. März 1998 (1998-03-31) & JP 09 322491 A (HITACHI LTD), 12. Dezember 1997 (1997-12-12)
- W. BEITZ U. K.-H. KÜTTNER: 'Taschenbuch für den Maschinenbau', Bd. 18, 1995, SPRINGER-VERLAG, BERLIN, ISBN 3-540-57650-9 Artikel W. BEITZ U. K.-H. KÜTTNER: 'Section G152'

## Beschreibung

Die Erfindung betrifft eine Wickelvorrichtung für zu bewickelnde Teile nach dem Anspruch 1.

Die JP 2003-169455 A beschreibt eine Wickelvorrichtung nach dem Oberbegriff des Anspruchs 1.

Eine Wickelvorrichtung ist beispielsweise durch die DE 26 32 671 A1 bekannt. Diese beschreibt eine Wickelvorrichtung für zu bewickelnde Teile, insbesondere Spulen. Die als Wickelspindel ausgeführte Wickelnadel ist dabei mit mehreren Freiheitsgraden sowohl in Richtung der Längsachse als auch quer zu dieser beweglich. Das zu bewickelnde Teil ist dabei um seine Längsachse rotationsbeweglich antreibbar. Aufgrund der parallelen Anordnung mehrerer Wickelstationen kann dabei die Bearbeitungszeit nahezu vollständig auf die reine Wickelzeit beschränkt werden, so dass Zusatzarbeiten wie das Be- und Entladen die notwendigen Zeiten nur unwesentlich beeinflussen.

Eine vergleichbare Wickelvorrichtung beschriebt auch die DE 30 49 406 A1, die sich im Wesentlichen dadurch von der zuvor genannten Wickelvorrichtung unterscheidet, dass dabei die Relativbewegung des zu bewickelnden Teils gegenüber der Wickenadel parallel zu dessen Längsachse durch eine Bewegung des zu bewickelnden Teils erfolgt.

Die DE 37 09 687 C2 offenbart auch bereits eine Wickelvorrichtung für Statoren oder Anker von Elektromotoren als zu wickelnde Teile, die auf einer Einspannstation festgelegt sind. Zur Bewicklung ist eine Wickelnadel, die in vertikaler Richtung bewegbar ist, vorgesehen, und die an ihrem oberen Ende wenigstens einen Wickelfinger trägt. Die Wickelvorrichtung weist drei Antriebe für das Anbringen der Wicklungen an den zu wickelnden Teilen auf. Hierzu ist ein Drehantrieb vorgesehen, der das eingespannte, zu wickelnde Teil um seine vertikale Längsachse dreht. Die Wickelnadel wird in vertikaler Richtung mit Hilfe eines zweiten Antriebs angetrieben, der vorzugsweise eine Spindel-Mutter-Einrichtung enthält. Zusätzlich ist ein dritter Antrieb für die Steuerung einer weiteren Achse vorgesehen, der einen Schlitten aufweist, an dem der Drehantrieb, der das eingespannte, zu wickelnde Teil um seine vertikale Längsachse dreht, angebracht ist, so dass mit Hilfe dieses dritten Antriebes das zu wickelnde Teil in horizontaler Richtung translatorisch verfahren werden kann. Durch die Kombination der Antriebsbewegungen können somit die Windungen der Wicklungen in vorbestimmter Weise gesteuert genau nebeneinander an den zu wickelnden Teilen angebracht werden, wobei die Bewicklung der Teile durch die entsprechenden Verstellbewegungen ausgeführt wird.

Die US 6,003,805 A offenbart eine Wickelvorrichtung mit einer Wickelnadel, die sich relativ zum Stator längs zur Statorlängsachse sowie quer dazu bewegt. Die Ausrichtung der Wickelnadel quer zur Statorlängsachse kann durch Einstellschrauben variiert werden. Damit wird die radiale Position der Auslassöffnung verändert.

Ferner sind Wickelvorrichtungen auch in der EP 182 177 A1, der EP 098 666 B1, der JP 59-178947, der DE 27 52 793 A1, sowie der DE 35 16 763 A1 beschrieben.

Als nachteilig erweist sich bei allen bisher bekannten Wickelvorrichtungen, dass die Orientierung der Wickelnadel grundsätzlich parallel zu der Längsachse des zu bewickelnden Teils ausgerichtet ist. Dadurch wird insbesondere das Wickeln von Innenkonturen wesentlich erschwert.

Die DE 32 11 688 C2 beschreibt einen Industrie-Roboter mit einer Doppel-Parallelogrammführung, durch die die einmal eingegebene räumliche Position des Werkzeugmittelpunktes auch dann nicht verloren geht, wenn der Halter geneigt wird.

Es ist auch bereits daran gedacht worden, unterschiedliche Aufnahmen für dieselbe oder unterschiedliche Wickelnadeln vorzusehen, um so verschiedene Arbeitspositionen einstellen zu können. Hierdurch werden jedoch erhebliche Stillstandszeiten verursacht, so dass dieser Gedanke bisher in der Praxis keine industrielle Umsetzung gefunden hat.

Der Erfindung liegt die Aufgabe zugrunde, eine Möglichkeit zu schaffen, den für die Schwenkbewegung erforderlichen Platzbedarf zu reduzieren.

Diese Aufgabe wird erfindungsgemäß mit einer Wickelvorrichtung gemäß den Merkmalen des Anspruchs 1 gelöst. Die Unteransprüche betreffen besonders zweckmäßige Weiterbildungen der Erfindung.

Erfindungsgemäß ist also eine Wickelvorrichtung vorgesehen, bei der die Wickelnadel relativ zu der Aufnahme von einer ersten Arbeitsposition in eine zweite Arbeitsposition um eine mit der Auslassöffnung der Wickelnadel im Wesentlichen übereinstimmenden Schwenkachse schwenkbeweglich ausgeführt ist und die Aufnahme eine Parallelogrammführung aufweist. Die Erfindung geht dabei von der Überlegung aus, dass dann die Einstellung verschiedener Arbeitspositionen insbesondere auch ohne Unterbrechung möglich ist, wenn die Schwenkbewebung nicht zu einer Verlagerung der Auslassöffnung für den Draht führt. Daher wird die Entstehung von Drahtlose, verursacht durch eine anderenfalls schlagartig nachlassende Drahtspannung, zuverlässig ausgeschlossen. Die Schwenkbewegung führt demnach lediglich zu einer Änderung der Orientierung der Wickelnadel, nicht hingegen zu einer Änderung der Raumposition.

Dadurch, dass die Aufnahme eine Paralletogrammführung aufweist, wird der für die Schwenkbewegung erforderliche Platzbedarf wesentlich verringert und dadurch zugleich der Wickelvorgang vereinfacht. Die parallelen Hebelarme der Parallelogrammführung sind mit einer die Wickelnadel tragenden Platte verbunden, so dass deren parallele Relativbewegung zu einer Schwenkbewegung der Wickelnadel führt.

Beispielsweise kann zugleich mit der Einleitung der Schwenkbewegung durch die parallele Relativbewegung der Hebelarme die gesamte Parallelogrammführung quer zu der Längsachse bewegt werden, um so die Raumposition der Auslassöffnung der Wickelnadel nicht zu verändern.

Eine besonderst praxisgerechte Ausgestaltung der vorliegenden Erfindung wird auch dann erreicht, wenn die Parallelogrammführung zwei parallele Hebelarme aufweist, die bei der Bewegung zwischen den Arbeitspositionen zugleich relativ zueinander in Richtung der Längsachse parallel verschoben als auch gemeinsam quer zu der Längsachse verlagert werden, indem die Parallelogrammführung an einem Schlitten verfahrbar oder an einer Drehscheibe schwenkbar angeordnet ist.

Eine ebenso Erfolg versprechende Abwandlung wird hingegen dadurch erreicht, dass die Hebelarme der Parallelogrammführung durch ein Schwenkelement verbunden sind, welches schwenkbar an der Aufnahme angeordnet ist, wobei die Schwenkachse des Schwenkelementes in einer zu der Längsachse parallelen Ebene schwenkbar an der Aufnahme angeordnet ist. Hierdurch wird durch die Einleitung der parallelen Verlagerung der beiden parallelen Hebelarme der Parallelogrammführung zugleich auch eine Querverlagerung der Parallelogrammführung erreicht, so dass weitere Stellmittel nicht erforderlich sind.

Die Einstellungen der verschiedenen Arbeitspositionen können manuell erfolgen. Besonders zweckmäßig ist hingegen eine weitere Ausgestaltung bei der die Vorrichtung zur Einstellung der ersten oder zweiten Arbeitsposition einen Antrieb aufweist, der beispielsweise eine Schubstange aufweist, die mittels eines Gelenks mit zumindest einem der beiden Schwenkelemente verbunden ist, und dadurch eine Veränderung der Arbeitsposition ohne Verzögerung und durch ein Steuerprogramm gesteuert einstellen zu können. Der Antrieb kann dabei pneumatisch oder elektromotorisch erfolgen.

Die beiden Arbeitspositionen können dadurch problemlos einen Winkel von 90° einschließen.

Eine andere ebenfalls besonders praxisgerechte Ausgestaltung der vorliegenden Erfindung wird auch dadurch erreicht, dass die Wickelnadel mittels eines Kupplungselementes mit einem Antrieb verbunden ist, welches bei Überschreiten einer zulässigen Krafteinleitung einen Schlupf gestattet, um so eine Beschädigung der Wickelnadel, insbesondere bei einer unbeabsichtigten Kollision zu vermeiden. Das Kupplungselement verbindet hierzu beispielsweise die Wickelnadel mit dem Antrieb kraftschlüssig durch eine einstellbare Vorspannkraft.

Die axiale Bewegung der Wickelnadel könnte durch ein Umlaufgetriebe realisiert werden. Eine besonders zuverlässige Weiterbildung der Erfindung wird hingegen auch dann erreicht, wenn die axiale Bewegung der Wickelnadel mittels eines Kurbelantriebes einleitbar ist, wobei der Kurbelhub einstellbar ist, wodurch eine zuverlässige und weitgehend wartungsfreie Antriebseinheit geschaffen wird. Durch den einstellbaren Kurbelhub wird zudem ein pösitionsgenaues Anfahren des zu bewickelnden Teils ermöglicht, ohne dass hierzu der Kurbelantrieb erforderlich ist.

Besonders Erfolg versprechend ist eine Ausgestaltung, bei der die Wickelnadel an einer Führung axial beweglich angeordnet ist, wobei die Führung mittels eines Antriebes quer zu der Längsachse mittels eines zweiten Antriebes beweglich ist, um auf diese Weise eine gewünschte Verlegebewegung durch die Verlagerung der Wickelnadel zu erreichen. Hierdurch wird die Wickelvorrichtung wesentlich vereinfacht.

Insbesondere ist dabei das zu bewickelnde Teil ausschließlich schwenkbeweglich an der Wickelvorrichtung angeordnet. Hierdurch wird die Steuerung der Bewegungsachsen weiter vereinfacht, indem die gewünschten transversalen Bewegungen durch eine Bewegung der Wickelnadel erreicht werden und das zu bewickelnde Teil lediglich mit einem Freiheitsgrad aufgespannt wird. Eine Höhenverstellung des zu bewickelnden Teils in axialer Richtung kann dabei ergänzend vorgesehen werden.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig.1: eine perspektivische Darstellung einer efindungsgemäßen Wickelvorrichtung;
- Fig.2: eine Aufnahme für eine Wickelnadel der in Figur 1 gezeigten Wickelvorrichtung in einer geschnittenen Seitenansicht;
- Fig.3: eine Antriebseinheit für die in Figur 2 gezeigte Wickelnadel in einer geschnittenen Seitenansicht.

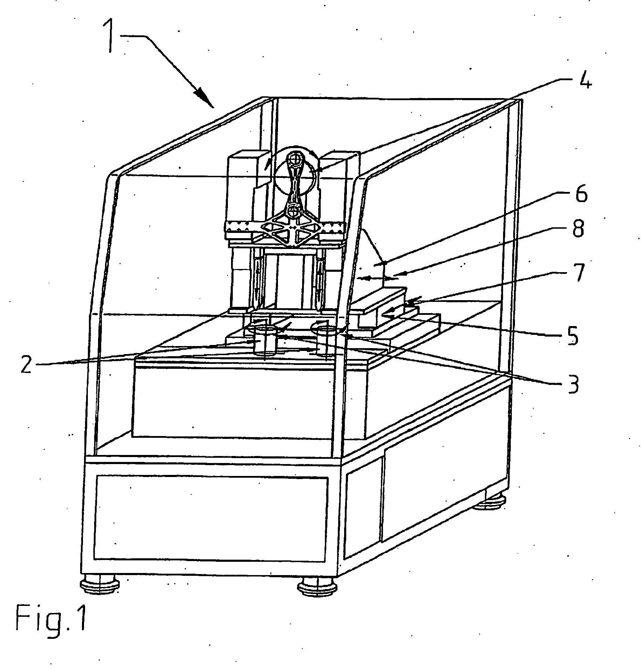

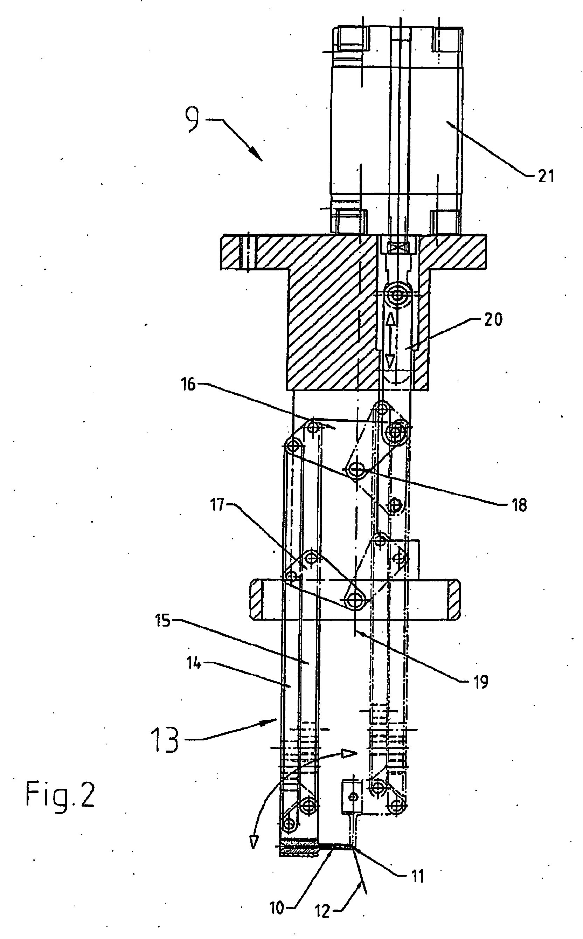

Figur 1 zeigt in einer eine perspektivische Darstellung einer erfindungsgemäßen Wickelvorrichtung 1 für ein nicht dargestelltes, zu bewickeindes Teil, welches insbesondere als ein Stator oder ein Anker für einen Elektromotor ausgeführt sein kann. Die Wickelvorrichtung 1 hat ein drehbeweglich um eine Drehachse 2 gelagertes Haltemittel 3 für das zu bewickelnde Teil. Relativ zu dem Haltemittel 3 ist ein Kurbelantrieb 4 für eine in Figur 2 näher dargestellte Wickelnadel 10 durch jeweils eine Führung 5, 6 in zwei Pfeilrichtungen 7, 8 quer zu der Drehachse 2 verfahrbar. Durch den Kurbelantrieb 4 wird eine axiale reversierende Bewegung der Wickelnadel 10 erreicht.

Hierzu ergänzend zeigt Figur 2 eine Aufnahme 9 für eine Wickeinadel 10 der in Figur 1 gezeigten Wickelvorrichtung1 in einer geschnittenen Seitenansicht. Die Wickelnadel 10 hat eine Auslassöffnung 11 für einen Draht 12. Die Aufnahme 9 hat eine Parallelogrammführung 13 für die Wickelnadel 10 zur wahlweisen Einstellung der gezeigten ersten Arbeitsposition oder der lediglich gestrichelt dargestellten zweiten Arbeitsposition, in welcher die Wickelnadel eine vertikale Orientierung hat. Um bei der Schwenkbewegung der Wickelnadel 10 eine virtuelle Schwenkachse zu realisieren, die mit der Auslassöffnung 11 übereinstimmt und dadurch die Änderung der Arbeitsposition ohne Einfluss auf die Drahtspannung und den Drahtverlauf ermöglicht, sind Hebelarme 14, 15 der Parallelogrammführung 13 durch zwei als Schwenkblech ausgeführte Schwenkelemente 16, 17 verbunden, wobei eine Schwenkachse 18 des Schwenkelementes 16 quer zu einer Längsachse 19 der Aufnahme 9 an dieser schwenkbar angeordnet ist. Hierdurch wird durch die Einleitung der parallelen Verlagerung der beiden parallelen Hebelarme 14, 15 der Parallelogrammführung 13 durch einen gemeinsamen eine Schubstange 20 aufweisenden Antrieb 21 zugleich auch eine Querverlagerung der Parallelogrammführung 13 erreicht, so dass weitere Stellmittel nicht erforderlich sind.

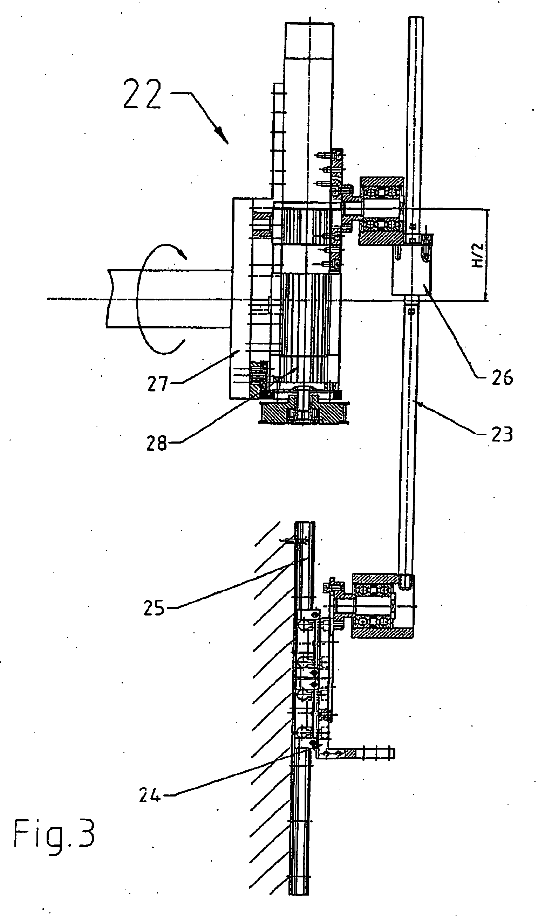

Figur 3 zeigt eine Antriebseinheit 22 für die in Figur 2 gezeigte Wickelnadel 10 in einer geschnittenen Seitenansicht. Zu erkennen ist eine Pleuelstange 23, durch welche eine Halterung 24 für die in Figur 2 gezeigte Aufnahme 9 in einer Linearführung 25 reversierend beweglich angeordnet ist. Die Pleuelstange 23 ist mittels eines Kupplungselementes 26 mit einem Kurbelrad 27 verbunden, welches bei Überschreiten einer zulässigen Krafteinleitung einen Schlupf gestattet. Zusätzlich ist der Kurbelhub H mittels eines Servomotors 28 einstellbar.

## Patentansprüche

1. Wickelvorrichtung (1) für zu bewickelnde Teile, insbesondere Statoren oder Anker von Elektromotoren, mit einer Aufnahme (9) für eine eine Auslassöffnung (11) für einen Draht (12) aufweisende Wickelnadel (10), die relativ zu dem um seine Längsachse (Drehachse 2) schwenkbeweglich antreibbaren zu bewickelnden Teil parallel zu dessen Längsachse (Drehachse 2) sowie zusätzlich quer zu der Längsachse (Drehachse 2), insbesondere translatorisch beweglich ausgeführt ist, wobei die Wickelnadel (10) relativ zu der Aufnahme (9) von einer ersten Arbeitsposition in eine zweite Arbeitsposition um eine mit der Auslassöffnung der Wickelnadel (10) im Wesentlichen übereinstimmenden Schwenkachse schwenkbeweglich ausgeführt ist, **dadurch gekennzeichnet, dass** die Aufnahme (9) eine Parallelogrammführung (13) aufweist.

2. Wickelvorrichtung (1) nach Anspruch 1, **dadurch gekennzeichnet, dass** die Wickelnadel (10) in der ersten Arbeitsposition eine im Wesentlichen horizontale Orientierung und in der zweiten Arbeitsposition eine im Wesentlichen vertikale Orientierung aufweist.

3. Wickelvorrichtung (1) nach einem der vorhergehenden Ansprüche, **dadurch gekennzeichnet, dass** die die Parallelogrammführung (13) zwei parallele Hebelarme aufweist, die bei der Bewegung zwischen den Arbeitspositionen zugleich relativ zueinander in Richtung der Längsachse parallel verschoben als auch gemeinsam quer zu der Längsachse verlagert werden.

4. Wickelvorrichtung (1) nach Anspruch 3, **dadurch gekennzeichnet, dass** die Hebelarme (14, 15) der Parallelogrammführung (13) durch ein Schwenkelement (16, 17) verbunden sind, welches schwenkbar an der Aufnahme (9) angeordnet ist.

5. Wickelvorrichtung (1) nach Anspruch 4, **dadurch gekennzeichnet, dass** die Schwenkachse (18) des Schwenkelementes (16) in einer zu der Längsachse (19) parallelen Ebene schwenkbar an der Aufnahme (9) angeordnet ist.

6. Wickelvorrichtung (1) nach zumindest einem der vorhergehenden Ansprüche, **dadurch gekennzeichnet, dass** die Wickelvorrichtung (1) zur Einstellung der ersten oder zweiten Arbeitsposition einen Antrieb (21) aufweist.

7. Wickelvorrichtung (1) nach Anspruch 5, **dadurch gekennzeichnet, dass** der Antrieb (21) eine Schubstange (20) aufweist, die mittels eines Gelenks mit zumindest einem der beiden Schwenkelemente (16, 17) verbunden ist.

8. Wickelvorrichtung (1) nach zumindest einem der vorhergehenden Ansprüche, **dadurch gekennzeichnet, dass** die beiden Arbeitspositionen einen Winkel von 90° einschließen.

9. Wickelvorrichtung (1) nach zumindest einem der vorhergehenden Ansprüche, **dadurch gekennzeichnet, dass** die Wickelnadel (10) mittels eines Kupplungselementes (26) mit einem Antrieb verbunden ist, welches bei Überschreiten einer maximal zulässigen Krafteinleitung eine relative Verlagerung gestattet.

10. Wickelvorrichtung (1) nach zumindest einem der vorhergehenden Ansprüche, **dadurch gekennzeichnet, dass** die axiale Bewegung der Wickelnadel (10) mittels eines Kurbelantriebes (Kurbelrad 27) einleitbar ist, wobei der Kurbelhub (H) einstellbar ist.

11. Wickelvorrichtung (1) nach zumindest einem der vorhergehenden Ansprüche, **dadurch gekennzeichnet, dass** die Wickelnadel (10) an einer Führung axial beweglich angeordnet ist, wobei die Führung (5) mittels eines Antriebes quer zu der Längsachse (Drehachse 2) mittels eines zweiten Antriebes beweglich ist.

12. Wickelvorrichtung (1) nach zumindest einem der vorhergehenden Ansprüche, **dadurch gekennzeichnet, dass** das zu bewickelnde Teil ausschließlich schwenkbeweglich an der Wickelvorrichtung (1) angeordnet ist.

## Claims

1. Winding device (1) for parts to be wound, in particular stators or armatures of electric motors, with a socket (9) for a winding needle (10) having an outlet opening (11) for a wire (12), which winding needle can be moved, in particular translationally, relative to the part to be wound which can be driven in a pivoting motion about its longitudinal axis (axis of rotation 2), parallel to the longitudinal axis (axis of rotation 2) thereof and also transversely to the longitudinal axis (axis of rotation 2), whereas the winding needle (10) is able to pivot relative to the socket (9) from a first operating position to a second operating position about a pivot axis which corresponds substantially to the outlet opening of the winding needle (10), **characterised in that** the socket (9) has a parallelogram guide (13).

2. Winding device (1) according to claim 1, **characterised in that** the winding needle (10) has a substantially horizontal orientation in its first operating position and a substantially vertical orientation in its second operating position.

3. Winding device (1) according to at least one of the preceding claim, **characterised in that** the parallelogram guide (13) has two parallel lever arms, which, when moving between the operating positions, are, at the same time, displaced in a parallel manner relative to one another in the direction of the longitudinal axis and are also jointly moved transversely to the longitudinal axis.

4. Winding device (1) according to claim 3, **characterised in that** the lever arms (14, 15) of the parallelogram guide (13) are connected via a pivot element (16, 17), which is arranged on the socket (9) so as to be able to pivot.

5. Winding device (1) according to claim 4, **characterised in that** the swivel pin (18) of the pivot element (16) is arranged on the socket (9) so as to be able to pivot in a plane parallel to the longitudinal axis (19).

6. Winding device (1) according to at least one of the preceding claims, **characterised in that** the winding device (1) has a drive (21) for adjusting the first or second operation position.

7. Winding device (1) according to claim 5, **characterised in that** the drive (21) has a push rod (20) which is connected to at least one of the two pivot elements (16, 17) by means of a joint.

8. Winding device (1) according to at least one of the preceding claims, **characterised in that** the two operating positions enclose an angle of 90°.

9. Winding device (1) according to at least one of the preceding claims, **characterised in that** the winding needle (10) is attached to a drive by means of a coupling element (26), which allows a relative displacement if a maximum permitted application of force is exceeded.

10. Winding device (1) according to at least one of the preceding claims, **characterised in that** the axial movement of the winding needle (10) can be initiated by a crank drive (crank wheel 27), the crank stroke (H) being adjustable.

11. Winding device (1) according to at least one of the preceding claims, **characterised in that** the winding needle (10) is arranged on a guide so as to be axially movable, the guide (5) being movable by means of a drive transverse to the longitudinal axis (axis of rotation 2) by means of a second drive.

12. Winding device (1) according to at least one of the preceding claims, **characterised in that** the part to be wound is arranged on the winding device (1) so as to be able only to pivot.

## Revendications

1. Dispositif de bobinage (1) destiné à des éléments à bobiner, en particulier des stators ou armatures de moteurs électriques, comportant un logement (9) destiné à une aiguille de bobinage (10) présentant un orifice de sortie (11) pour un fil (12), qui est réalisé de manière à pouvoir se déplacer en particulier selon un mouvement de translation par rapport à l'élément à bobiner, pouvant être entraîné selon un mouvement pivotant autour de son axe longitudinal (axe de rotation 2), parallèlement à son axe longitudinal (axe de rotation 2), et en outre transversalement par rapport à son axe longitudinal (axe de rotation 2), l'aiguille de bobinage (10) étant réalisée pour se déplacer de manière pivotante par rapport au logement (9) en passant d'une première position de travail à une deuxième position de travail autour d'un axe de pivotement correspondant sensiblement à l'orifice de sortie de l'aiguille de bobinage (10), **caractérisé en ce que** le logement (9) présente un guide de type parallélogramme (13).

2. Dispositif de bobinage (1) selon la revendication 1, **caractérisé en ce que** l'aiguille de bobinage (10), dans la première position de travail, présente une orientation sensiblement horizontale et, dans la deuxième position de travail, présente une orientation sensiblement verticale.

3. Dispositif de bobinage (1) selon au moins l'une quelconque des revendications précédentes, **caractérisé en ce que** le guide de type parallélogramme (13) présente deux bras de levier parallèles, qui sont décalés, simultanément, parallèlement l'un par rapport à l'autre en direction de l'axe longitudinal lors du déplacement entre les positions de travail, et sont également déplacés conjointement transversalement par rapport à l'axe longitudinal.

4. Dispositif de bobinage (1) selon la revendication 3, **caractérisé en ce que** les bras de levier (14, 15) du guide de type parallélogramme (13) sont reliés grâce à un élément pivotant (16, 17), lequel est disposé de manière pivotante sur le logement (9).

5. Dispositif de bobinage (1) selon la revendication 4, **caractérisé en ce que** l'axe de pivotement (18) de l'élément pivotant (16) est disposé dans un plan parallèle à l'axe longitudinal (19), de manière pivotante sur le logement (9).

6. Dispositif de bobinage (1) selon au moins l'une quelconque des revendications précédentes, **caractérisé en ce que** le dispositif de bobinage (1) présente un entraînement (21) permettant de régler la première ou deuxième position de travail.

7. Dispositif de bobinage (1) selon la revendication 5, **caractérisé en ce que** l'entraînement (21) présente une barre de poussée (20), qui est reliée à l'aide d'une articulation à au moins l'un des deux éléments pivotants (16, 17).

8. Dispositif de bobinage (1) selon au moins l'une quelconque des revendications précédentes, **caractérisé en ce que** les deux positions de travail forment un angle de 90°.

9. Dispositif de bobinage (1) selon au moins l'une quelconque des revendications précédentes, **caractérisé en ce que** l'aiguille de bobinage (10) est reliée à l'aide d'un élément d'accouplement (26) à un entraînement, qui permet un déplacement relatif lorsqu'on dépasse l'introduction d'une force maximale admissible.

10. Dispositif de bobinage (1) selon au moins l'une quelconque des revendications précédentes, **caractérisé en ce que** le mouvement axial de l'aiguille de bobinage (10) peut être produit à l'aide d'un entraînement à manivelle (pignon 27), moyennant quoi la course de manivelle (H) est réglable.

11. Dispositif de bobinage (1) selon au moins l'une quelconque des revendications précédentes, **caractérisé en ce que** l'aiguille de bobinage (10) est disposée de manière à pouvoir se déplacer axialement sur un guide, moyennant quoi le guide (5) est mobile à l'aide d'un entraînement transversalement par rapport à l'axe longitudinal (axe de rotation 2) à l'aide d'un deuxième entraînement.

12. Dispositif de bobinage (1) selon au moins l'une quelconque des revendications précédentes, **caractérisé en ce que** l'élément à bobiner est disposé exclusivement de manière à pouvoir se déplacer selon un mouvement pivotant sur le dispositif de bobinage (1).
